# EUROPEAN PATENT SPECIFICATION

(11) **EP 3 274 219 B1**
(45) Date of publication and mention of the grant of the patent: **19.08.2020**
(21) Application number: 16726935.6
(22) Date of filing: 23.03.2016
(51) Int. Cl.: B60S 1/34, B60S 1/20, B62J 17/00

(54) **WINDSHIELD WIPER DEVICE FOR A WINDSHIELD OF A SCOOTER OR THE LIKE**
WINDSCHUTZSCHEIBENWISCHVORRICHTUNG FÜR EINE WINDSCHUTZSCHEIBE EINES ROLLERS ODER DERGLEICHEN
DISPOSITIF D'ESSUIE-GLACE DE PARE-BRISE POUR UN PARE-BRISE DE SCOOTER OU SIMILAIRE

(30) Priority: 24.03.2015 IT RM20150123
(43) Date of publication of application: 31.01.2018
(73) Proprietor: Bovi, Annamaria, 00191 Roma (IT)
(72) Inventor: Bovi, Annamaria, 00191 Roma (IT)
(74) Representative: Cardelli, Guido
(86) International application number: PCT/IB2016/051656
(87) International publication number: WO 2016/151515

(56) References cited:
- JP-U- S5 230 050
- US-A- 5 179 758
- US-A1- 2007 234 500
- US-B1- 6 530 110

## Description

The present invention relates to a wiper device for scooters and the like and, more specifically, to a wiper device associated to a windshield for scooters which has an improved efficacy compared to wipers of the state of the art. The present invention also provides a windshield which incorporates such a device.

### State of the art

Up to date, there are several known types of windshield wiper devices for scooters or the like, which are mounted such as the windshield accessory for the scooter. Such types of windshield wiper device all provide a brush mounted in an oscillating manner and connected kinematically to an electric motor, wherein the brush describes a circular segment motion on the surface of the windshield and in a manner per se already known, being analogous to that of the windshield wipers for automobiles.

An example of such types of wiper for scooters and the like are described in JPS59140148 (A) (published August 11, 1984 in the name ICHIKOH INDUSTRIES LTD), and in JPH02200584 (A) (published August 8, 1990 in the name SUZUKI MOTOR CO.).

Nevertheless, these types of wiper devices for scooters have some drawbacks.

A first drawback consists in the fact that they cannot be fitted on all types of windshield for scooters. So, some scooters are excluded from such use.

Moreover, a second drawback is the fact that the brush performing a sector-shaped motion, has a useful surface (i.e., the surface to be wiped) which is very limited with respect to the geometry of the windshield, and with respect to the transparent surface actually useful for the driver.

From this it follows that the driver does not make use of a wide clean surface even if a wider area of the windshield it is provided.

Furthermore, from US 2007/0234500 and US 6,530,110 B1 are known cleansing systems for truck's rear view mirrors, and which provide a longitudinal brush that is moved on the surface of the mirror according to a reciprocating movement of the mirror and in the longitudinal direction. With this aim there is provided a system of belts and pulleys arranged inside the casing of the rear view mirror, and where such belts drag the wiping brush with reciprocating motion onto the mirror surface. The brush slides inside guides which are arranged at the two opposite sides of the mirror. For the movement it is provided an electric motor housed in the mirror housing and coupled to the pulleys by means of transmission shaft and a speed reducer.

These cleansing systems although effective, have the drawback of being complicated and bulky structure, and must necessarily be accommodated in a single dedicated carter and which contains the mirror and the cleansing system.

### Brief description of the invention

The object of the present invention is to solve the aforesaid drawbacks by providing a windshield wiper device for a scooter or similar, which device shows the possibility of being easily fitted to any shape of windshield and which provides a cleaning brush which runs a linear motion onto the surface of the windshield.

Another object of the present invention is to provide a windshield wiper device for a scooter or similar, which device is an integral part of the windshield, making in this way remarkably versatile and adaptable to any type of windshield for a motorcycle.

A further object of the present invention is to provide a windshield for a scooter or the like, which integrally incorporates a wiper device.

Therefore, the present invention provides a windshield wiper device for a scooter or the like substantially according to the appended claims.

### Detailed description of the invention

A detailed description of two preferred embodiments of the windshield wiper device for a scooter or the like of the present invention it will now be given, by way of not limiting example and making reference to the appended figures, wherein:
Figure 1 is a perspective view illustrating a windshield that incorporates the wiper device for a scooter or similar, of the present invention and according to a first preferred embodiment thereof;
Figure 2 is a front view which schematically illustrates the windshield of Figure 1 and incorporating the first embodiment of the windshield wiper device of the present invention;
Figure 3 is a front view which schematically illustrates a windshield which incorporates a second embodiment of the wiper device of the present invention; and
Figure 4 is a schematic front view partially illustrating in detail and in longitudinal section of the windshield wiper device of the present invention and according to its first embodiment.

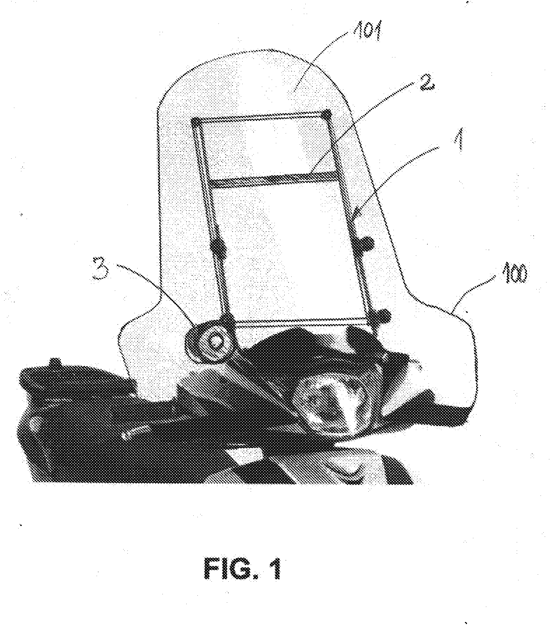

With reference now to Figure 1, it is illustrated therein a windshield 100 of a scooter, the windshield 100 incorporating the wiper device of the present invention.

According to the present invention, the device comprises a frame 1 which is substantially constituted by a rectangular quadrilateral. The frame 1 is fixedly mounted onto the outer surface 101 (i.e., the surface facing the front of the scooter). Inside the frame 1 there is arranged a longitudinal cleaning brush 2 to clean the surface 101 of the windshield, the wiper 2 is arranged to slide in a linear manner onto the surface 101 and between two opposite sides of the rectangular frame 1.

For the movement of the brush 2 and according to this embodiment there is provided an electric motor 3 which is also mounted onto the windshield 100 at a corner region of the frame 1 (better illustrated hereinafter). It will be apparent to those skilled in the art that the electric motor 3 can be replaced also by a manual handle with appropriate transmission multiplier, and thus realizing an alternative manual embodiment and efficient as much as the motorized one here illustrated.

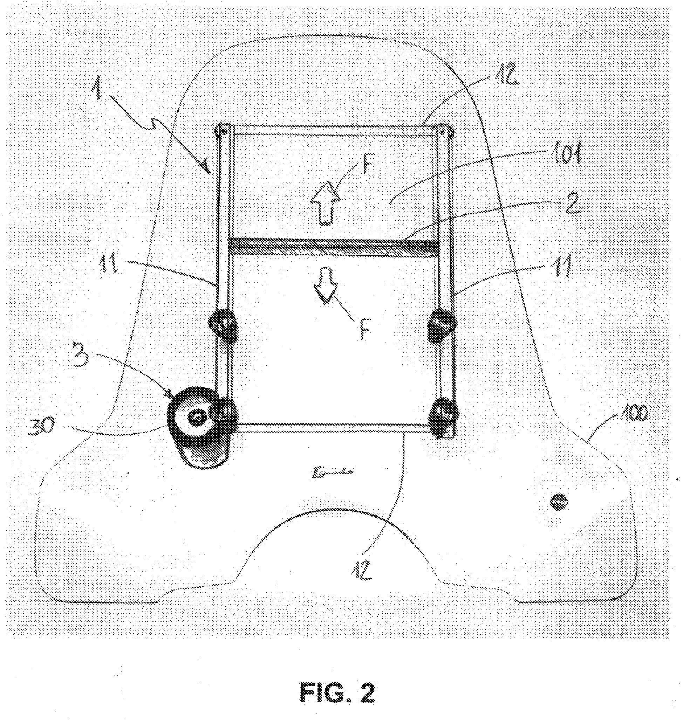

With reference now to Figure 2, there is illustrated therein a first preferred embodiment of the wiper device 1 mounted on the windshield 100.

As it is apparent from the figure, the wiper device comprises a rectangular frame 1 consisting of two opposite side members 11 having greater length than the other two opposite side members 12. The two opposite side members 11 of greater length are mounted according to the vertical direction of the windshield 100, while the side members 12 of shorter length are mounted according to the horizontal direction of the windshield 100.

According to the present invention, the cleansing brush 2 has a substantially elongated shape and it is slidably mounted at its ends inside of the opposite frame members 11 onto respective guides formed on each inner side of the frame members 11 (the guides not being shown in the figure but illustrated in more detail in the following).

The electric motor 3 it is also mounted onto the windshield 100 via a fixing flange 30, integral with the frame 1 at a corner region of the frame (in the figure it corresponds to the lower region of the frame 1).

As it is apparent from the figure, the arrangement is such that functioning of the electric motor 3 does perform a longitudinal excursion of the brush 2 from top to bottom of the windshield 100 and vice versa (i.e., vertically and as indicated by the arrows F in the figure).

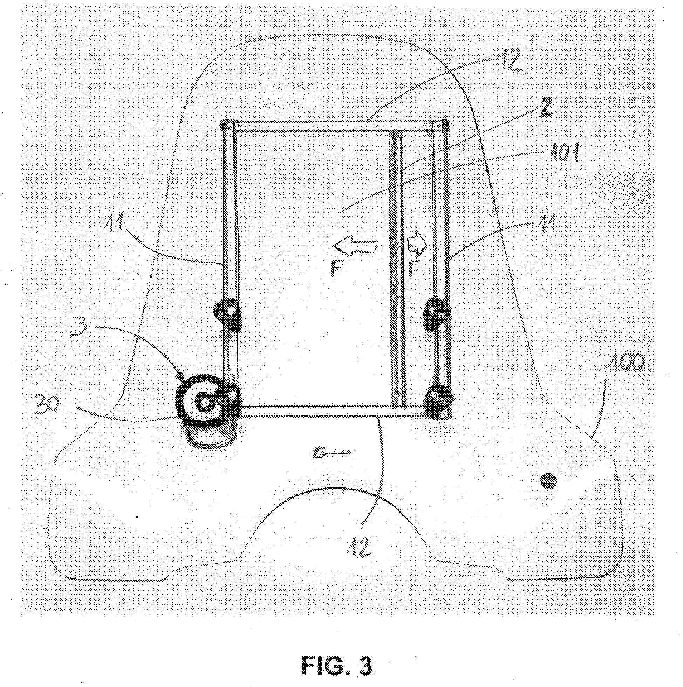

With reference now to Figure 3, there is illustrated therein a second preferred embodiment of the wiper device 1 mounted on the windshield 100.

For sake of clarity, like parts have the same numbers, and their detailed description will be omitted here because it already provided previously.

According to this second embodiment, there is provided that the brush 2 it is mounted in a longitudinally sliding manner on two opposite frame members 12, the arrangement is such that function of the motor 3 does perform a longitudinal excursion of the brush 2 from one side to the other side of the windshield 100, and vice versa (that is, horizontally and as indicated by the arrows F in the figure).

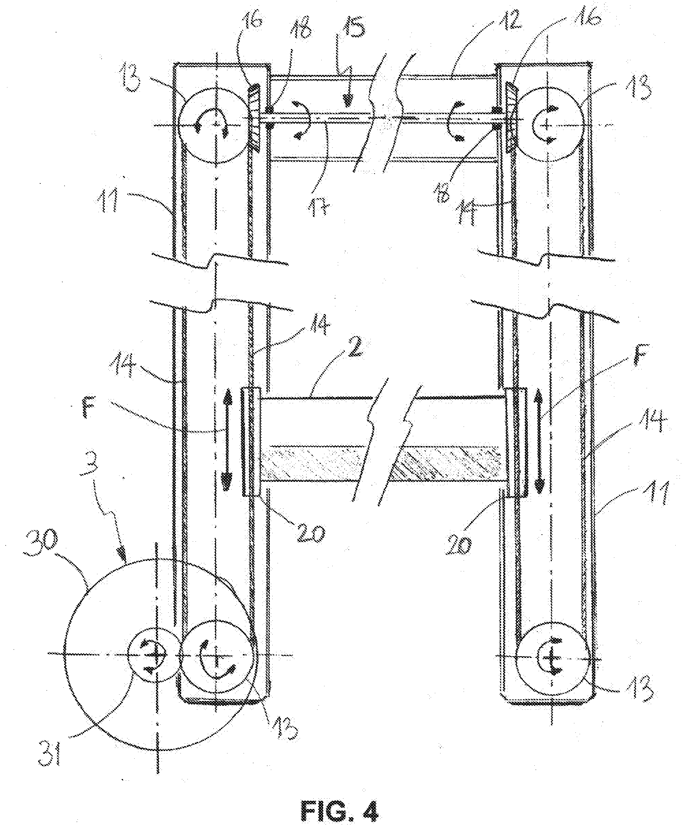

With reference now to Figure 4, there is illustrated therein and in detail and partially the first embodiment of the windshield wiper device of the present invention.

As it is apparent from the figure, the frame members 11 each enclose inside a kinematic mechanism, which comprises a pair of pulleys 13 and a continuous flexible tie or belt 14. On the tie or belt 14 it is mounted in a fixed manner a bush 20, the bush 20 supporting the ends of the brush 2.

At a frame member 12 (in the figure, there is illustrated at upper frame 12) there is arranged inside a kinematic transmission 15 consisting of a pair of conical gears 16 which engage with the respective pulleys 13, and a shaft 17 connecting the conical gear 16, the shaft 17 being rotatably mounted on respective supports 18 arranged within the frame members 11.

At the electric motor 3 (i.e., at the lower left side of the frame 1 in the figure) there is provided the flange 30 for supporting the motor 3 onto the frame 1. The arrangement is such that the motor 3 kinematically engages the pinion 31 with a respective pulley 13, transmitting to the latter the motion.

As can be appreciated in the figure, following to the rotation of the pinion 31 of the motor 3, the rotation is transmitted to the engaged pulley 13. The rotation of the pulley 13 transmits the motion of the tie or belt 14, and therefore the rotation is transmitted to the pulleys 13 arranged at the opposite side of the frame 1 by means of the kinematic mechanism 15.

The motion of the tie or belt 14 moves the bush 20 inside the frames 11. The motion of the bush 20 equivalent to a longitudinal motion of the brush 2 (from the top down and / or vice versa, and according to the arrows F shown in the figure).

The wiper device of the present invention has several advantages.

A first advantage is given by the fact that the arrangement of the wiper device is such that it is suitable to be mounted on many shapes of windshield indifferently by the size of the latter.

Another advantage is given by the fact that the provision of the brush 2 of the wiper device is such that it is possible to make use of a cleaned area having a size larger than the wiper devices of the prior art and for the same dimensions of the windshield on which it is mounted.

A further advantage is given by the reliability and the effectiveness of cleansing that the device has with respect to wiper devices of the prior art. In fact, the motion of the brush 2 along a longitudinal trajectory shows a greater effectiveness of cleansing compared with the brushes moving in a circular sector and according to the state of the art devices.

Another advantage is given by the fact that the wiper device of the present invention can be operated either by electric motor or manually depending on the construction version.

## Claims

1. Windshield wiper device for a windshield (100) of a scooter or the like, comprising a frame (1) which is substantially constituted by a rectangular quadrilateral, said frame (1) being fixedly mounted onto a surface (101) of said windshield (100), and an elongated brush (2) for wiping said surface (101) of the windshield (100), the brush (2) being arranged to slide with a linear motion onto said surface (101) and between two opposite sides of the rectangular frame (1), wherein said frame encloses a kinematic mechanism which comprises a pair of pulleys (13) and a continuous flexible tie or belt (14), said flexible tie or belt (14) comprising connection means (20) for supporting said brush (2),
**characterized in that** it further comprises a kinematic transmission (15) that comprises at least a pair of conical gears (16) which engage each with a respective pulley (13), and a rotatable shaft (17) connecting said pair of conical gears (16).

2. Windshield wiper device for a windshield (100) of a scooter according to the preceding claim, wherein for moving the brush (2) there are provided power means (3).

3. Windshield wiper device for a windshield (100) of a scooter according to the preceding claim, wherein said power means comprises an electric motor (3) mounted onto said windshield (100) at a corner region of said frame (1).

4. Windshield wiper device for a windshield (100) of a scooter according to any of the preceding claims, wherein said rectangular frame (1) consists of two opposite side elements (11) having a greater length than the length of two other opposed side members (12), at least two of said side members (11;12) having respective internally formed guides in each side element (11;12) for slidably housing the ends of said brush (2).

5. Windshield wiper device for a windshield (100) of a scooter according to any of claims 2-4, wherein the functioning of the power means (3) performs an alternating longitudinal motion of said brush (2) from one side (11; 12) of the frame (1) toward the opposite side (11; 12) and vice versa.

6. Windshield wiper device for a windshield (100) of a scooter according to any of the preceding claims, wherein said means for supporting said brush (2) in said mechanism comprises a bush (20) mounted in a fixed manner onto said tie or belt (14).

7. Windshield wiper device for a windshield (100) of a scooter according to claim 1, wherein said kinematic transmission (15) is housed within a side of the frame (11; 12) .

8. Windshield wiper device for a windshield (100) of a scooter according to any of the preceding claims, further comprising a flange (30) for supporting said power means (3) onto said frame (1) at a corner region of said frame (1), the arrangement being such that said power means (3) kinematically engage a respective pulley (13), transmitting to the latter the motion.

9. A Windshield (100) for a scooter or the like integrally incorporating the wiper device (1) according to the preceding claims.

## Patentansprüche

1. Windschutzscheibenwischvorrichtung für eine Windschutzscheibe (100) eines Rollers oder dergleichen, umfassend einen Rahmen (1), der im Wesentlichen aus einem rechteckigen Viereck gebildet ist, wobei der Rahmen (1) fix auf einer Oberfläche (101) der Windschutzscheibe (100) montiert ist, und eine längliche Bürste (2) zum Wischen der Oberfläche (101) der Windschutzscheibe (100), wobei die Bürste (2) angeordnet ist, um mit einer linearen Bewegung auf der Oberfläche (101) und zwischen zwei entgegengesetzten Seiten des rechteckigen Rahmens (1) verschoben zu werden, wobei der Rahmen einen kinematischen Mechanismus umschließt, der ein Paar Riemenscheiben (13) und ein durchgehendes flexibles Band oder einen durchgehenden flexiblen Gurt (14) umfasst, wobei das flexible Band oder der flexible Gurt (14) Verbindungsmittel (20) zum Halten der Bürste (2) umfassen,
**dadurch gekennzeichnet, dass** sie zudem einen kinematischen Antrieb (15) umfasst, der mindestens ein Paar Kegelräder (16) umfasst, die jeweils in eine jeweilige Riemenscheibe (13) eingreifen, und eine drehbare Welle (17), die das Paar Kegelräder (16) verbindet.

2. Windschutzscheibenwischvorrichtung für eine Windschutzscheibe (100) eines Rollers nach dem vorhergehenden Anspruch, wobei zum Bewegen der Bürste (2) Antriebsmittel (3) bereitgestellt sind.

3. Windschutzscheibenwischvorrichtung für eine Windschutzscheibe (100) eines Rollers nach dem vorhergehenden Anspruch, wobei die Antriebsmittel einen Elektromotor (3) umfassen, der auf der Windschutzscheibe (100) in einer Eckregion des Rahmens (1) montiert ist.

4. Windschutzscheibenwischvorrichtung für eine Windschutzscheibe (100) eines Rollers nach einem der vorhergehenden Ansprüche, wobei der rechteckige Rahmen (1) aus zwei gegenständigen Seitenelementen (11) besteht, aufweisend eine größere Länge als die Länge der zwei anderen entgegengesetzten Seitenelemente (12), wobei mindestens zwei der Seitenelemente (11; 12) jeweilige innenseitig ausgebildete Führungen in jedem Seitenelement (11; 12) für die verschiebbare Unterbringung der Enden der Bürste (2) aufweisen.

5. Windschutzscheibenwischvorrichtung für eine Windschutzscheibe (100) eines Rollers nach einem der Ansprüche 2-4, wobei der Betrieb der Antriebsmittel (3) eine Längspendelbewegung der Bürste (2) von einer Seite (11; 12) des Rahmens (1) zur anderen Seite (11; 12) und umgekehrt bewirkt.

6. Windschutzscheibenwischvorrichtung für eine Windschutzscheibe (100) eines Rollers nach einem der vorhergehenden Ansprüche, wobei die Mittel zum Tragen der Bürste (2) im Mechanismus eine Bürste (20) umfassen, die fix auf dem Band oder Gurt (14) montiert ist.

7. Windschutzscheibenwischvorrichtung für eine Windschutzscheibe (100) eines Rollers nach Anspruch 1, wobei der kinematische Antrieb (15) innerhalb einer Seite des Rahmens (11; 12) untergebracht ist.

8. Windschutzscheibenwischvorrichtung für eine Windschutzscheibe (100) eines Rollers nach einem der vorhergehenden Ansprüche, zudem umfassend einen Flansch (30) zum Tragen der Antriebsmittel (3) auf dem Rahmen (1) an einer Eckregion des Rahmens (1), wobei die Anordnung so ausgestaltet ist, dass die Antriebsmittel (3) kinematisch in eine jeweilige Riemenscheibe (13) eingreifen und die Bewegung auf diese übertragen.

9. Windschutzscheibe (100) für einen Roller oder dergleichen, vollständig umfassend die Wischvorrichtung (1) nach den vorhergehenden Ansprüchen.

## Revendications

1. Dispositif d'essuie-glace de pare-brise pour un pare-brise (100) d'un scooter ou similaire, comprenant un cadre (1) étant substantiellement constitué par un quadrilatère rectangulaire, ledit cadre (1) étant monté fixement sur une surface (101) dudit pare-brise (100), et un balai allongé (2) servant à essuyer ladite surface (101) du pare-brise (100), le balai (2) étant disposé pour coulisser avec un mouvement linéaire sur ladite surface (101) et entre deux côtés opposés du cadre rectangulaire (1), dans lequel ledit cadre renferme un mécanisme cinématique comprenant une paire de poulies (13) et une attache ou courroie (14) flexible continue, ladite attache ou courroie (14) flexible comprenant des moyens de raccordement (20) pour supporter ledit balai (2),
**caractérisé en ce qu'**il comprend de plus une transmission cinématique (15) comprenant au moins une paire d'engrenages coniques (16) se mettant en prise chacun avec une poulie (13) respective, et un arbre rotatif (17) reliant ladite paire d'engrenages coniques (16).

2. Dispositif d'essuie-glace de pare-brise pour un pare-brise (100) d'un scooter selon la revendication précédente, dans lequel il est prévu des moyens de puissance (3) pour déplacer le balai (2).

3. Dispositif d'essuie-glace de pare-brise pour un pare-brise (100) d'un scooter selon la revendication précédente, dans lequel lesdits moyens de puissance comprennent un moteur électrique (3) monté sur ledit pare-brise (100) en correspondance d'une zone angulaire dudit cadre (1).

4. Dispositif d'essuie-glace de pare-brise pour un pare-brise (100) d'un scooter selon l'une quelconque des revendications précédentes, dans lequel ledit cadre rectangulaire (1) consiste en deux éléments latéraux (11) opposés ayant une longueur supérieure à la longueur de deux autres éléments latéraux (12) opposés, au moins deux desdits éléments latéraux (11 ; 12) ayant des guides respectifs formés intérieurement dans chaque élément latéral (11 ; 12) pour loger de façon coulissante les extrémités dudit balai (2).

5. Dispositif d'essuie-glace de pare-brise pour un pare-brise (100) de scooter selon l'une quelconque des revendications 2-4, dans lequel le fonctionnement des moyens de puissance (3) effectue un mouvement longitudinal alternatif dudit balai (2) à partir d'un côté (11 ; 12) du cadre (1) vers le côté opposé (11 ; 12) et vice versa.

6. Dispositif d'essuie-glace de pare-brise pour un pare-brise (100) de scooter selon l'une quelconque des revendications précédentes, dans lequel lesdits moyens de support dudit balai (2) dans ledit mécanisme comprennent une douille (20) montée de manière fixe sur ladite attache ou courroie (14).

7. Dispositif d'essuie-glace de pare-brise pour un pare-brise (100) d'un scooter selon la revendication 1, dans lequel ladite transmission cinématique (15) est logée à l'intérieur d'un côté du cadre (11 ; 12).

8. Dispositif d'essuie-glace de pare-brise pour un pare-brise (100) d'un scooter selon l'une quelconque des revendications précédentes, comprenant de plus une bride (30) servant à supporter lesdits moyens de puissance (3) sur ledit cadre (1) en correspondance d'une zone angulaire dudit cadre (1), la disposition étant telle que lesdits moyens de puissance (3) se mettent en prise de façon cinématique avec une poulie (13) respective, en transmettant le mouvement à cette dernière.

9. Pare-brise (100) pour un scooter ou similaire incorporant intégralement le dispositif d'essuie-glace (1) selon les revendications précédentes.
